# EUROPÄISCHE PATENTSCHRIFT

(11) **EP 1 036 204 B1**
(45) Veröffentlichungstag und Bekanntmachung des Hinweises auf die Patenterteilung: **03.04.2002**
(21) Anmeldenummer: 98966154.1
(22) Anmeldetag: 12.11.1998
(51) Int. Cl.: C21C 5/52, C21C 5/56, F27B 3/18, F27D 3/00

(54) **BESCHICKUNGSEINRICHTUNG FÜR ELEKTRO-SCHACHTÖFEN MIT ELEKTRODENAUFNEHMENDEM ZENTRALROHR**
FEEDING DEVICE FOR ELECTRICAL SHAFT FURNACES WITH AN ELECTRODE-RECEIVING CENTRAL TUBE
DISPOSITIF D'ALIMENTATION POUR FOURS A CUVE ELECTRIQUES AVEC TUBE CENTRAL ABRITANT DES ELECTRODES

(30) Priorität: 05.12.1997 DE 19755890
(43) Veröffentlichungstag der Anmeldung: 20.09.2000
(73) Patentinhaber: SMS Demag AG, 40237 Düsseldorf (DE)
(72) Erfinder: SCHMALE, Klaus, D-47839 Krefeld (DE); SCHÜRING, Andreas, D-45475 Mülheim (DE); GRUND, Guido, D-46282 Dorsten (DE); LEMKE, Joachim, D-47506 Neukirchen-Vluyn (DE)
(74) Vertreter: Meissner, Peter E., Dipl.-Ing.
(86) Internationale Anmeldenummer: DE9803420
(87) Internationale Veröffentlichungsnummer: WO9929914

(56) Entgegenhaltungen:
- EP-A- 0 770 690
- DE-A- 2 408 713
- DE-A- 3 314 943
- US-A- 4 285 713
- DATABASE WPI Section Ch, Week 8601 Derwent Publications Ltd., London, GB; Class M24, AN 86-005212 XP002099281 & SU 1 161 562 A (DNEPR METAL INST) , 15. Juni 1985

## Beschreibung

Die Erfindung betrifft eine Beschickungseinrichtung für geschlossene, an eine Gasabzugseinrichtung angeschlossene Schachtöfen, insbesondere für Niederschachtöfen zum Einschmelzen von Stahlschrott, mit einer zum Kopf des Ofenobergefäßes führenden Transporteinrichtung, die mindestens teilweise in die Ofenatmosphäre eingebunden ist, und eine Verteileinrichtung zum Verteilen der Charge.

Aus DE-PS 17 58 842 ist eine Beschickungseinrichtung für gasdichte Elektroöfen bekannt, bei der jeder Elektrode Beschickungsrohre zugeordnet sind, oberhalb derer ein mit einem Drehantrieb verbundener Ring vorgesehen ist, der mit einem Förderband zum Transport der Charge verbunden ist. Die Beschickungsrohre sind in ihrem oberen Teil als Bunker ausgebildet, über denen Trichter vorgesehen sind, die über mehrere Laufräder auf einem sich auf einer kreisförmigen Schiene abstützenden Ring drehbar angeordnet sind. Der Ring ist durch Tassendichtungen gasdicht abgeschlossen.

Diese konstruktiv aufwendige Einrichtung erlaubt nur ein punktförmiges von der Anzahl der Bunker abhängiges Belegen der Teufe mit Charge.

Aus DE-PS 33 14 943 ist eine Vorrichtung zur Beschickung elektrothermischer Schmelzöfen bekannt, bei denen Ringkammern konzentrisch um jede Elektrode angeordnet sind mit mindestens einer verschließbaren, zum Ofengefäß gehenden Öffnung, einer konzentrischen inneren Wand und einer mit ihr verbundenen konzentrischen äußeren Wand, wobei die beiden Wände relativ zur Elektrode drehbar sind.

Mit dieser komplizierten Beschickungsvorrichtung läßt sich die Charge bezogen auf den gesamten Ofenkopf nicht gleichmäßig verteilen.

Weiterhin ist aus DE 44 07 861 C1 eine Beschickungsvorrichtung für geschlossene Lichtbogenöfen bekannt, bei denen die Charge konzentrisch zur und gleichmäßig rings um eine konzentrische Ofenhauptachse vorgesehene Ringkammer chargiert wird. Hierzu wird eine Fahreinrichtung eingesetzt, die schaltbare Lastmagnete aufweist.

Nachteile dieser Vorrichtung ist das Erfordernis ausschließlich metallischer Charge, die vom Magnetförderer transportiert werden kann.

Die Erfindung hat sich das Ziel gesetzt, eine Beschickungseinrichtung für geschlossene Schachtöfen zu schaffen, die mit konstruktiv einfachen Mitteln ein sicheres Zuführen einer auch nicht metallischen Charge zu beliebigen Punkten der Teufe im Ofen gewährleistet.

Die Erfindung erreicht dieses Ziel durch die Merkmale des Anspruchs 1. Die nachfolgenden Unteransprüche sind vorteilhafte Weiterbildungen der Erfindung.

Erfindungsgemäß ist im Ofenkopf ein Karussell vorgesehen, welches aus Klappelementen aufgebaut ist und auf einer Bahn im Ofenkopf drehbar geführt ist. Das Karussell ist durch eine Fördereinrichtung mit Charge belegbar. Zum Belegen des Karussells genügt ein Aufgabepunkt. Das Karussell kann dabei gleichmäßig oder aber sowohl mengen- wie materialmäßig vorgebbar belegt werden.

Zum Chargieren wird das Karussell in eine Position gebracht und durch gezieltes Ansteuern der einzelnen Klappelemente entleert.

Die einzelnen Klappelemente können dabei als Zinken ausgebildet sein, die sich zu ihrer Spitze hin verjüngen. In einer anderen vorteilhaften Ausgestaltung sind die Klappelemente als Segmente eines Ringes mit einer Breite B mit B = 1/4 bis 1/16 des Umfanges des Ofenkopfes und einer Tiefe c von c = 0,1 bis 1,0 x R
mit R = Radius des Ofenkopfes dimensioniert.

Zum Dämpfen der Stöße beim Auftreffen der Charge auf die einzelnen Klappen des Karussells sind Drehklappenelemente und Dämpfungselemente vorgesehen. Diese Dämpfer können unabhängige Elemente sein, auf denen sich die Klappen abstützen, es können aber auch Teile der die Klappen haltenden Hebel sein.

Zum einfachen Betätigen der Klappelemente sind diese im Bereich der Kippachse mit Hebeln versehen, die an Aktuatoren angeschlossen sind. Als Aktuatoren werden Kolben-Zylinder-Einheiten oder auch Drehantriebe vorgeschlagen.

Das erfindungsgemäße Karussell ist bei beliebigen Schachtöfen einsetzbar einschließlich bei Niederschachtöfen, die Elektroden zum Einschmelzen der Charge besitzen. Diese Elektroden können ungeschützt in den Ofeninnenraum ragen oder auch von einem Zentralrohr umgeben sein.

Bei Elektrolichtbogenöfen mit einem Zentralrohr wird vorgeschlagen, die Enden der Klappelemente an am Zentralrohr befestigten Stützelementen abzustützen. In einer vorteilhaften Ausgestaltung können diese Stützelemente formschlüssig mit den Klappelementen verbunden werden, beispielsweise als Drehhebel ausgestaltet sein. Während der Belegung des Karussellls mit Charge werden die einzelnen Klappen arretiert und vor ihrem Öffnen gelöst.

Erfindungsgemäß kann die Drehachse der Klappen entsprechend des äußeren Ringes des Karussells geführt sein, sie können aber auch radial zur Ofenhauptachse weisen. Im letzteren Fall können die Klappelemente als zweiflüglige Klappen ausgestaltet werden.

Zum Betätigen der Klappen werden Kolben-Zylinder-Einheiten oder Drehantriebe vorgeschlagen. Zum Abfangen der Stöße werden jeweils Dämpfungselemente eingesetzt. Bei den Drehantrieben können hierbei Rückkupplungen zum Einsatz kommen. Weiterhin kann bei den Drehantrieben die Verbindung zu den einzelnen Klappen über Seilelemente erfolgen.

Die einzelnen Antriebe der Klappen sind an eine Meß- und Regeleinrichtung angeschlossen, wobei diese mit einer Teufenmessung regelungstechnisch in Verbindung steht, so daß verbrauchsgerecht die Teufe mit Charge belegt wird.

Ein Beispiel der Erfindung ist in der beigefügten Zeichnung dargelegt. Es zeigen hier die
- Figur 1: einen Schnitt durch einen Niederschachtofen
- Figur 2: Draufsicht auf das Karussell
- Figur 3: eine einflüglige Klappe
- Figur 4: eine zweiflüglige Klappe.

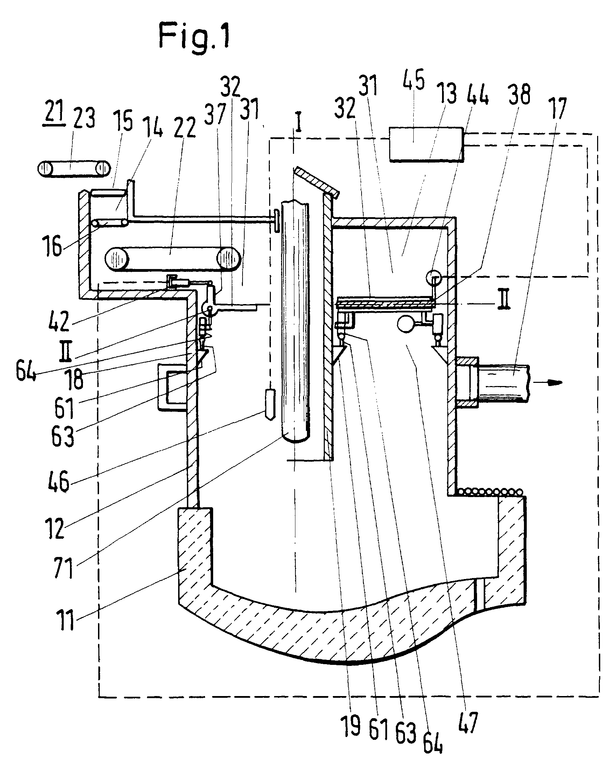

Die Figur 1 zeigt ein Ofenuntergefäß 11, auf dem ein Ofenobergefäß 12 aufgesetzt ist, in welches im Ofenkopf 13 durch eine Fördereinrichtung 21, hier bestehend aus einem inneren Förderband 22 und einem endlosen Zuführband 23, beschickt wird. Zwischen dem Zuführband 23 und dem Förderband 22 ist eine Schleuse 14 angeordnet, die eine äußere Klappe 15 und eine innere Klappe 16 besitzt.

Die Fördereinrichtung 21 kann - in der Figur 1 hier nicht weiter dargestellt - beliebig ausgestaltet sein, beispielsweise als Korb oder als Rutsche oder ähnliches.

In der vorliegenden Form wird die Charge über das innere Förderband 22 zu einem Karussell 31 gefördert.

Im linken Teil der Figur 1 ragt die Elektrode ungeschützt in das Ofenobergefäß 12. Weiterhin ist skizzenhaft eine Teufenmessung 46 dargestellt.

Das im linken Teil der Figur 1 oberhalb der Gasabzugseinrichtung dargestellte Karussell 31 besitzt Klappelemente 32, die um die Kippachse II drehbar sind und Hebel 37 besitzen, die an eine Kolben-Zylinder-Einheit 42 angeschlossen sind. Die Klappelemente 32 sind über Räder 64 auf Schienen 63 drehbar gelagert.

Im rechten Teil der Figur 1 ist die Elektrode 71 von einem Zentralrohr 19 umgeben. Am Zentralrohr 19 sind Stützelemente 61 vorgesehen, auf dem Schienen 63 befestigt sind, über die Räder 64 laufen. Das gleiche Rad-Schienensystem ist am Mantel des Ofenobergefäßes 12 vorgesehen. Die Räder 64 sind mit Wellen 38 verbunden, die radial zur Ofenachse I weisen, und an denen Klappelemente 32 angeordnet sind, die als zweiflüglige Klappen 36 ausgestaltet sind, welche über Drehantriebe 44 drehbar sind.

Der Drehantrieb 44 wie auch die Kolben-Zylinder-Einheit 42 sind mit einer Meß- und Regelrichtung 45 verbunden, an welche eine Teufenmessung 46 regelungstechnisch angeschlossen ist.

Weiterhin ist ein Fahrantrieb 49 vorgesehen, mit denen das Karussell 31 drehbar ist. Über die hier dargestellten Radschienenantriebe sind auch andere Antriebe wie beispielsweise ein Magnetschwebeantrieb oder ein Gleitlager einsetzbar.

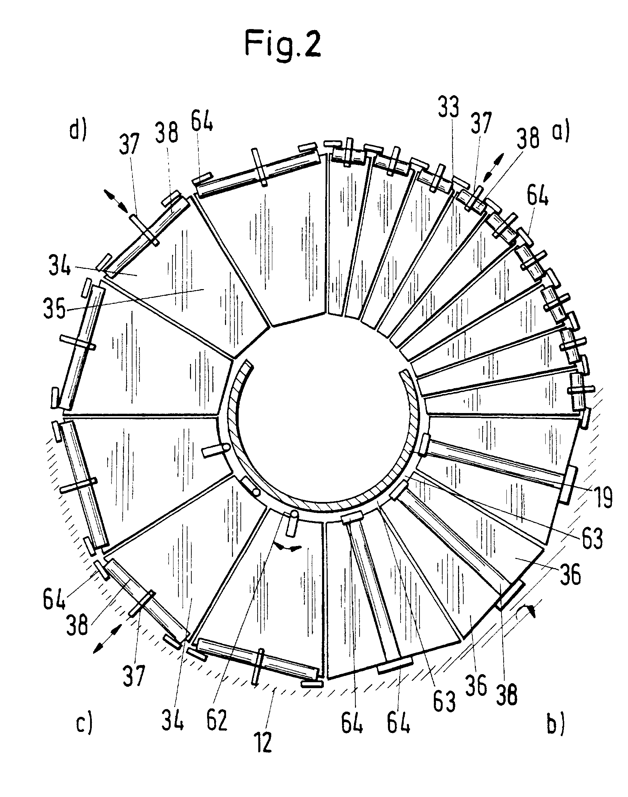

Die Figur 2 zeigt ein Karussell in der Draufsicht, und zwar in vier Quadranten a-d in grundsätzlich unterschiedlicher Bauart.

Der Quadrant a zeigt Zinken 33, mit Hebeln 37. Diese Zinken 33 sind einsetzbar bei einem Ofen mit oder ohne Zentralrohr 19.

Der Quadrant b zeigt Klappelemente 32 mit zweiflügligen Klappen 36 und radial zur Ofenmitte weisenden Wellen 38. An den Wellenenden 38 sind Räder 64 angebracht.

Der Quadrant c zeigt Klappelemente 32 als Ringsegmente 34, bei denen Hebel 37 die Klappelemente 32 um eine Welle 38 drehen. Die Ringsegmente 34 werden von am Zentralrohr 19 befestigten Drehhebeln 62 gehalten und sind durch diese arretierbar.

Im Segment d sind Ringsegmente 34 vorgesehen, an denen Hebel 37 befestigt sind, die die Segmente 34 um die Welle 38 drehen.

Die Ringsegmente 34 sind bei einem Schachtofen mit und ohne Zentralrohr 19 einsetzbar.

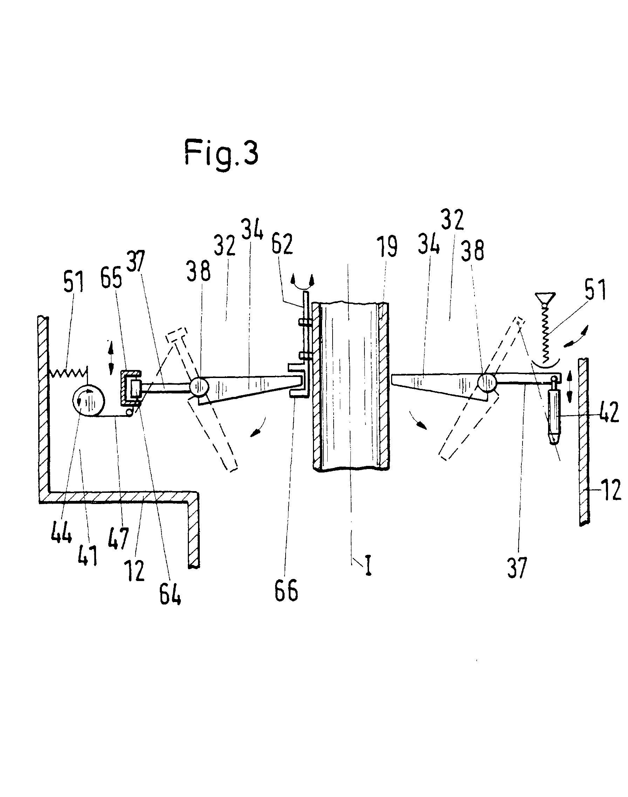

Die Figur 3 zeigt als einflüglige Klappen ausgestaltete Klappelemente 32, die in einem Ofenobergefäß 12 angeordnet sind, zu dem konzentrisch ein Zentralrohr 19 geführt ist.

Auf der rechten Seite ist ein Ringsegment 34 um eine Welle 38 drehbar. Am Ringsegment 34 ist ein Hebel 37 befestigt, der über eine Kolben-Zylinder-Einheit 42 das Klappelement 32 in seiner Halteposition hält bzw. zum Einbringen der Charge umklappt.

Um Stöße aufzufangen, die von der Charge auf das Klappelement 32 während der Befüllung wirken, ist ein Dämpfungselement 51 vorgesehen, das im vorliegenden Fall schwenkbar ausgestaltet ist und gleichzeitig die Klappe in der geschlossenen Stellung arretiert.

Auf der linken Seite ist als Aktuator 41 ein Drehantrieb 44 vorgesehen, der über ein Seil 47 mit dem Klappelement 32 in Verbindung steht.

Bei dem hier skizzierten Ringsegment 34, welches um die Welle 34 kippbar ist, ist ein Hebel 37 befestigt, bei dem kopfendig ein Rad 64 angebracht ist, welches in einem Radführungssegment 65 geführt ist. Das Radführungssegment läßt sich in der Weise verschieben, daß das Rad 64 und damit das komplette Klappelement 32 freigibt.

Am Zentralrohr 19 sind Drehhebel 62 angebracht, die Greifelemente 66 besitzen, mit denen die Ringsegmente 34 kopfendig greifbar sind. Durch Drehen der Drehhebel 62 wird das Ringsegment 34 kopfendig zum Aufklappen freigegeben.

Bei den in Figur 3 dargestellten Klappen wird die Charge in der Weise in den Ofen gefördert, daß sich diese vorwiegend in der Nähe des Zentralrohres 19 ansammelt. Dieser Effekt ist bei bestimmten Fahrweisen des Ofens gewollt.

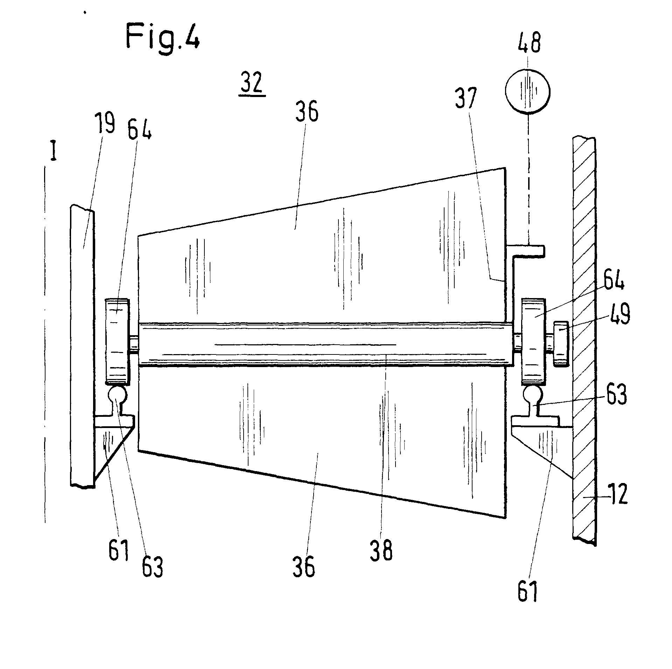

In der Figur 4 ist das Klappelement 32 als zweiflüglige Klappe 36 ausgestaltet. In der Klappenmitte ist die Welle 38 vorgesehen, die beidendig Räder 64 besitzt. Die Räder 64 werden über Schienen 63 geführt, die auf Stützelementen 61 am Ofenobergefäß 12 sowie am Zentralrohr 19 befestigt sind.

An der Welle 38 ist ein Hebel 37 befestigt, der mit einem Klappantrieb 48 verbunden ist. Dieser Klappantrieb 48 kann als Kolben-Zylinder-Einheit 42 oder auch als Drehantrieb 44 ausgestaltet sein.

Ohne weitere Detaillierung ist das Klappelement 32 mit einem Fahrantrieb 49 verbunden.

### Positionsliste

### Schachtofen

- 11: Ofenuntergefäß
- 12: Ofenobergefäß
- 13: Ofenkopf
- 14: Schleuse
- 15: Äußere Klappe
- 16: Innere Klappe
- 17: Gasabzugseinrichtung
- 18: Mantel (12)
- 19: Zentralrohr

### Fördern

- 21: Fördereinrichtung
- 22: Inneres Förderband
- 23: Endloszuführband

### Verteilen

- 31: Karussell
- 32: Klappelement
- 33: Zinken
- 34: Ringsegment
- 35: Ring
- 36: Zweiflüglige Klappe
- 37: Hebel
- 38: Welle

### Messen und Regeln

- 41: Aktuator
- 42: Kolben-Zylinder-Einheit
- 43: Antrieb
- 44: Drehantrieb
- 45: Meß- und Regeleinrichtung
- 46: Teufenmessung
- 47: Seil
- 48: Klappenantrieb (36)
- 49: Fahrantrieb

### Dämpfen

- 51: Dämpfungselement

### Stützen

- 61: Stützelement
- 62: Drehhebel
- 63: Schiene
- 64: Räder
- 65: Radführungssegment
- 66: Greifelement

### Elektrik

- 71: Elektrode
- I: Ofenachse
- II: Kippachse

## Patentansprüche

1. Beschickungseinrichtung für geschlossene, an eine Gasabzugseinrichtung angeschlossene Schachtöfen, insbesondere für Niederschachtöfen zum Einschmelzen von Stahlschrott, mit einer zum Kopf des Ofenobergefäßes führenden Transporteinrichtung, die mindestens teilweise in die Ofenatmosphäre eingebunden ist, und eine Verteileinrichtung zum Verteilen der Charge,
**dadurch gekennzeichnet,**
**daß** im Ofenkopf (13) ein von einer Fördereinrichtung (21) mit Charge belegbares Karussell (31) vorgesehen ist,
**daß** das Karussell (31) im Ofenkopf (13) auf einer am Mantel (18) des Ofenobergefäßes (12) befestigten Bahn (65) oberhalb der Gasabzugseinrichtung (17) drehbar geführt ist und
**daß** das Karussell (31) an Aktuatoren (41) angeschlossene Klappelemente (32) aufweist.

2. Beschickungseinrichtung nach Anspruch 1,
**dadurch gekennzeichnet,**
**daß** die Klappelemente (32) Segmente (34) eines Ringes (35) sind mit einer Tiefe (c) mit
c = 0,1 bis 1,0 x R mit R = Radius des Ofenkopfes
und einer Breite B = 1/4 bis 1/16 x U mit U = Umfang des Ofenkopfes.

3. Beschickungseinrichtung nach Anspruch 1,
**dadurch gekennzeichnet,**
**daß** die Klappelemente (32) zu ihrer Spitze konisch sich verjüngende Zinken (33) sind.

4. Beschickungseinrichtung nach einem der o.g. Ansprüche,
**dadurch gekennzeichnet,**
**daß** an den Klappelementen (32) im Bereich ihrer Kippachse (III) Hebel (37) vorgesehen sind, die mit den Aktuatoren (41) verbindbar sind.

5. Beschickungseinrichtung nach Anspruch 1,
**dadurch gekennzeichnet,**
**daß** die Aktuatoren (41) eine Kolben-Zylinder-Einheit (42) aufweisende Antriebe (43).

6. Beschickungseinrichtung nach Anspruch 1,
**dadurch gekennzeichnet,**
**daß** die Aktuatoren (41) Drehantriebe (44) sind.

7. Beschickungseinrichtung nach Anspruch 6,
**dadurch gekennzeichnet,**
**daß** die Drehantriebe (44) über Seile (47) mit den Klappelementen (32) verbindbar sind.

8. Beschickungseinrichtung nach Anspruch 1,
**dadurch gekennzeichnet,**
**daß** an den Klappelementen (32) Dämpfungselemente (51) angeordnet sind, die in Schließstellung der Klappelemente (32) Stöße der auftreffenden Charge dämpfen.

9. Beschickungseinrichtung nach einem der o.g. Ansprüche,
**dadurch gekennzeichnet,**
**daß** bei einem Schachtofen mit einem koaxial zum zylindrischen Ofenobergefäß (12) angeordnetes zur Materialführung und zur Elektrodenaufnahme bestimmtes Zentralrohr (19) sich die Enden der Klappelemente (32) an am Zentralrohr (19) befestigten Stützelementen (61) abstützen.

10. Beschickungseinrichtung nach Anspruch 9,
**dadurch gekennzeichnet,**
**daß** die Stützelemente (61) formschlüssig mit den Klappelementen (32) verbindbar sind, z.B. als Drehhebel (62) ausgestaltet sind.

11. Beschickungseinrichtung nach Anspruch 9,
**dadurch gekennzeichnet,**
**daß** die Klappelemente (32) Drehachsen (II) besitzen, die um Wellen (38) drehbar angeordnet sind und die konzentrisch zur Ofenachse (I) weisen, und
**daß** die Klappelemente (32) als zweiflüglige Klappen (36) ausgestaltet sind, die sich im Bereich der Drehachse (II) auf an der Innenwand des Ofenobergefäßes (12) und der Außenwand des Zentralrohres (19) angeordnete Stützelemente (61) abstützen.

12. Beschickungseinrichtung nach Anspruch 11,
**dadurch gekennzeichnet,**
**daß** die Stützelemente (61) als Schienen (63) ausgebildet sind, auf denen Räder (64) rollen, die mit den Drehachsen (II) der Klappelemente (32) verbunden sind.

13. Beschickungseinrichtung nach Anspruch 4,
**dadurch gekennzeichnet,**
**daß** die Antriebe (42, 43) mit einer Meß- und Regeleinrichtung (45) in Verbindung stehen, durch die jede einzelne Klappe (32) betätigbar ist.

14. Beschickungseinrichtung nach Anspruch 13,
**dadurch gekennzeichnet,**
**daß** die Meß- und Regeleinrichtung (45) mit einer Teufenmessung (46) regelungstechnisch verbunden ist.

## Claims

1. Feeding device for closed shaft furnaces which are connected to a gas extracting device, in particular for low-shaft furnaces for melting steel scrap, with a conveyor device leading to the head of the upper tank of the furnace and which is integrated at least in part to the furnace atmosphere, and a distribution device for distributing the charge,
**characterised in that**
in the furnace head (13) is provided a carousel (31) which can be filled with the charge from a conveyor device (21),
**in that** the carousel (31) is guided in the head (13) of the furnace on a path (65) secured to the jacket (18) of the upper tank (12) of the furnace above the gas extracting device (17) in such a way that it can rotate, and
**in that** the carousel (31) has shutter elements (32) connected to actuators (41).

2. Feeding device according to claim 1,
**characterised in that**
the shutter elements (32) are segments (34) of a ring (35) with a depth (c) with c=0, 1 to 1.0 x R where R = the radius of the furnace head
and a width B = 1/4 to 1/16 x U where U = the circumference of the furnace head.

3. Feeding device according to claim 1,
**characterised in that**
the shutter elements (32) are prongs (33) which taper in a conical manner to their tip.

4. Feeding device according to one of the above-mentioned claims,
**characterised in that**
there are provided on the shutter elements (32) in the region of their horizontal axis (III) levers (37) which can be connected to the actuators (41).

5. Feeding device according to claim 1,
**characterised in that**
the actuators (41) are drives (43) having a piston-cylinder unit (42).

6. Feeding device according to claim 1,
**characterised in that**
the actuators (41) are rotary operating mechanisms (44).

7. Feeding device according to claim 6,
**characterised in that**
the rotary operating mechanisms (44) can be connected to the shutters (32) via cables (47).

8. Feeding device according to claim 1,
**characterised in that**
there are disposed on the shutter elements (32) cushioning elements (51) which in the closing position of the shutter elements (32) soften the impact of the striking charge.

9. Feeding device according to one of the above-mentioned claims,
**characterised in that**
in a shaft furnace having a central tube (19) disposed coaxially with the cylindrical upper tank (12) of the furnace to guide material and to receive electrodes, the ends of the shutter elements (32) are supported on supporting members (61) secured to the central tube (19).

10. Feeding device according to claim 9,
**characterised in that**
the supporting members (61) can be connected to the shutter elements (32) in an interlocking manner, e.g. are designed as rotary levers (62).

11. Feeding device according to claim 9,
**characterised in that**
the shutter elements (32) have fulcrum pins (II) which are arranged rotatable around shafts (38) and which point concentrically to the furnace axis (I), and **in that** the shutter elements (32) are designed as double-bladed flaps (36) which are supported in the region of the fulcrum pin (II) on supporting members (61) arranged on the inner wall of the upper tank (12) of the furnace and the outer wall of the central tube (19).

12. Feeding device according to claim 11,
**characterised in that**
the supporting members (61) are configured as rails (63) on which roll wheels (64) which are connected to the fulcrum pins (II) of the shutter elements (32).

13. Feeding device according to claim 4,
**characterised in that**
the drives (42, 43) are connected to a measuring and control device (45) by means of which each individual shutter (32) can be actuated.

14. Feeding device according to claim 13,
**characterised in that**
the measuring and control device (45) is connected in a control engineering manner to a device for measuring the charge level.

## Revendications

1. Dispositif de chargement pour des fours à cuve fermés, raccordés à un dispositif d'évacuation de gaz, en particulier pour des bas fourneaux pour la fusion de ferrailles d'acier, comportant un dispositif de transport menant à la tête du récipient supérieur de four, qui est intégré au moins partiellement dans l'atmosphère du four, et un dispositif de répartition pour répartir la charge,
**caractérisé en ce que**, dans la tête du four (13), il est prévu un carrousel (31) pouvant être garni d'une charge par un dispositif de transport (21), **en ce que** le carrousel (31) est guidé de façon rotative dans la tête du four (13) sur une voie (65) fixée sur l'enveloppe (18) du récipient supérieur de four (12) au-dessus du dispositif d'évacuation de gaz (17), et **en ce que** le carrousel (31) présente des éléments basculants (32) raccordés à des actionneurs (41).

2. Dispositif de chargement selon la revendication 1,
**caractérisé en ce que** les éléments basculants (32) sont des segments (34) d'une bague (35) ayant une profondeur (c) telle que c = 0,1 à 1,0 x R, avec R = rayon de la tête du four, et une largeur B = 1/4 à 1/16 x U, avec U = périphérie de la tête du four.

3. Dispositif de chargement selon la revendication 1,
**caractérisé en ce que** les éléments basculants (32) sont des dents (33) s'amincissant de façon conique vers leur pointe.

4. Dispositif de chargement selon une des revendications précitées,
**caractérisé en ce que**, sur les éléments basculants (32), sont prévus, dans la zone de leur axe de basculement (III), des leviers (37) qui peuvent être reliés aux actionneurs (41).

5. Dispositif de chargement selon la revendication 1,
**caractérisé en ce que** les actionneurs (41) sont des entraînements (43) présentant un vérin (42).

6. Dispositif de chargement selon la revendication 1,
**caractérisé en ce que** les actionneurs (41) sont des entraînements rotatifs (44).

7. Dispositif de chargement selon la revendication 6,
**caractérisé en ce que** les entraînements rotatifs (44) peuvent être reliés aux éléments basculants (32) par l'intermédiaire de câbles (47).

8. Dispositif de chargement selon la revendication 1,
**caractérisé en ce que**, sur les éléments basculants (32), sont agencés des éléments d'amortissement (51), qui, dans la position de fermeture des éléments basculants (32), amortissent des chocs de la charge faisant impact.

9. Dispositif de chargement selon une des revendications précitées,
**caractérisé en ce que**, pour un four à cuve ayant un tube central (19) agencé coaxialement au récipient supérieur de four cylindrique (12), destiné à guider la matière et à recevoir des électrodes, les extrémités des éléments basculants (32) s'appuient sur des éléments d'appui (61) fixés au tube central (19).

10. Dispositif de chargement selon la revendication 9,
**caractérisé en ce que** les éléments d'appui (61) peuvent être reliés par coopération de formes avec les éléments basculants (32), en étant réalisés par exemple comme leviers rotatifs (62).

11. Dispositif de chargement selon la revendication 9,
**caractérisé en ce que** les éléments basculants (32) présentent des axes de rotation (II), qui sont agencés de façon rotative autour d'arbres (38) et qui s'étendent de façon concentrique par rapport à l'axe du four (I), et **en ce que** les éléments basculants (32) sont réalisés comme des clapets (36) à deux ailes, qui, dans la zone de l'axe de rotation (II), s'appuient sur des éléments d'appui (61) agencés sur la paroi interne du récipient supérieur de four (12) et la paroi externe du tube central (19).

12. Dispositif de chargement selon la revendication 11,
**caractérisé en ce que** les éléments d'appui (61) sont réalisés comme rails (63) sur lesquels roulent des roues (64), qui sont reliées aux axes de rotation (II) des éléments basculants (32).

13. Dispositif de chargement selon la revendication 4,
**caractérisé en ce que** les entraînements (42, 43) sont reliés à un dispositif de mesure et de réglage (45), grâce auquel chaque clapet individuel (32) peut être actionné.

14. Dispositif de chargement selon la revendication 13,
**caractérisé en ce que** le dispositif de mesure et de réglage (45) est relié, par une technique de régulation, à un moyen de mesure de profondeur (46).
